# EUROPÄISCHE PATENTANMELDUNG

(11) **EP 0 744 270 A2**
(43) Veröffentlichungstag der Anmeldung: **27.11.1996**
(21) Anmeldenummer: 95111815.7
(22) Anmeldetag: 27.07.1995
(51) Int. Cl.: B29C 47/40

(54) **Mehrwellige Schneckenmaschine mit Gleich- und Gegendrallschneckenelementen**

(30) Priorität: 09.08.1994 DE 4428105
(71) Anmelder: BAYER AG, 51368 Leverkusen (DE)
(72) Erfinder: Kohlgrüber, Klemens, Dr., D-51515 Kürten (DE)

(57) **Zusammenfassung**

Bei einer mehrwelligen Schneckenmaschine die aus mehreren gleichsinnig oder gegensinnig rotierenden Schneckenwellen besteht ist mindestens ein Schneckenbesatz (6) mit der dazugehörigen Schneckenwelle (3) formschlüssig verbunden, während auf dem gegenüberliegenden Schneckenwellenabschnitt frei drehbar ein Gegendrallelement (7) gelagert ist, das mit entgegengesetzter Drehrichtung über die Schneckenwelle (3) vom dem formschlüssig verbundenen Schneckenbesatz 6 angetrieben wird.

## Beschreibung

Die Erfindung betrifft eine mehrwellige Schneckenmaschine mit einem Gehäuse und einem Motor zum Antrieb von mehreren gleichsinnig oder gegensinnig rotierenden Schneckenwellen, die mit schraubenförmigen und miteinander im Eingriff befindlichen Schneckenbesätzen zur Produktförderung ausgerüstet sind. Darüber hinaus können die Schneckenwellen auch mit anderen Schneckenwellenbesätzen, z.B. Exzenterscheiben zum Mischen und Kneten sowie linksgängigen Gewindeabschnitten oder Stauscheiben bestückt werden. Schneckenelemente bzw. -besätze sind z.B. beschrieben in H. Herrmann, Schneckenmaschinen in der Verfahrenstechnik, Springer Verlag 1972.

Zweiwellenschneckenmaschinen werden entweder als Gleich- oder als Gegendrallschnecken ausgeführt. Im Falle von Gleichdrallschnecken haben die beiden ineinandergreifenden Schnecken gleichen Schraubensinn (beide linksgängig oder beide rechtsgängig) und werden mit gleicher Drehrichtung angetrieben. Im Falle von Gegendrallschnecken ist das eine Schneckenelement linksgängig und das andere rechtsgängig, d.h. die Schneckenelemente haben entgegengesetzten Schraubensinn und werden auch gegensinnig, d.h. mit entgegengesetzten Drehrichtungen angetrieben. Der Antriebsmotor ist bei Mehrwellenschneckenmaschinen grundsätzlich immer mit den Schneckenwellen gekoppelt.

Es ist bekannt, daß Zweiwellengleichdrallschnecken eine gute Produktmischwirkung haben und andererseits nur einen relativ schlechten Pumpwirkungsgrad besitzen. Umgekehrt haben Gegendrallschnecken eine bessere Pumpwirkung und andererseits eine schlechtere Mischwirkung. In der chemischen Verfahrenstechnik werden daher je nach Aufgabenstellung entweder Gleichdrall- oder Gegendrallschneckenmaschinen eingesetzt. Bei Prozessen, bei denen mehrere Verfahrensstufen dieser Art hintereinandergeschaltet sind, werden dann verschiedene Typen von Schneckenmaschinen als Einzelanlagen jeweils mit einem eigenen Antrieb hintereinandergeschaltet. Der Stofftransport zwischen den einzelnen Maschinen erfolgt durch drehzahlgeregelte Dosierpumpen.

Hier setzt die Erfindung an. Es liegt die Aufgabe zugrunde, durch maschinenbauliche Änderungen den Anwendungsbereich von mehrwelligen Schneckenmaschinen in der chemischen Verfahrenstechnik zu erweitern. Insbesondere sollen die Vorteile von Gleichdrall- und Gegendrallschnecken miteinander kombiniert werden können.

Diese Aufgabe wird bei einer mehrwelligen Schneckenmaschine mit einem Gehäuse und einem Antriebsmotor erfindungsgemäß dadurch gelöst, daß mindestens ein Schneckenbesatz mit der dazugehörigen Welle formschlüssig verbunden ist, während auf dem gegenüberliegenden Schneckenwellenabschnitt frei drehbar ein Gegendrallelement gelagert ist, das mit entgegengesetzter Drehrichtung über die Schneckenwelle mit dem formschlüssig verbundenen Schneckenbesatz angetrieben wird. "Formschlüssig verbunden" bedeutet dabei, daß der Schneckenbesatz auf die Welle aufgeschoben bzw. aufgesteckt werden kann aber gegen Verdrehen gesichert ist. Im Gegensatz dazu ist das gegenüberliegende Gegendrallelement frei drehbar auf der Welle gelagert. Das Gegendrallelement weist also einen Schraubensinn auf, der dem Schraubensinn des zuvor erwähnten Schneckenbesatzes entgegengesetzt ist.

Auf diese Weise wird erreicht, daß in einer Schneckenmaschine mit einem Gehäuse und einem Antriebsmotor Gleichdrallabschnitte und Gegendrallabschnitte unmittelbar aufeinanderfolgen können.

Die Forderung der freien Drehbarkeit des Gegendrallelements kann dadurch erfüllt werden, daß die Schneckenwelle im Bereich des Gegendrallelements unterbrochen ist und daß das Gegendrallelement an dem einen Teil mit einem Teil seiner Länge frei drehbar auf dem Endabschnitt der Schneckenwelle gelagert ist und an seinem anderen Ende formschlüssig mit dem fortgesetzten Teil der Schneckenwelle verbunden ist. Die fortgesetzte Schneckenwelle dreht sich dann gegenüber dem vorangehenden Teil mit entgegengesetzter Drehrichtung.

Alternativ kann diese Forderung auch dadurch erfüllt werden, daß das Gegendrallelement drehbar auf einer durchgehenden Schneckenwelle gelagert ist.

Bei den vorbeschriebenen Problemlösungen wird vorausgesetzt, daß der Schneckenbesatz auf der angetriebenen Welle in das Gegendrallelement eingreift und dieses antreibt. Aufgrund dieses Antriebs, der eine Drehrichtungsänderung zur Folge hat, treten axiale Kräfte auf, so daß die Schneckenflanken relativ stark beansprucht werden. Gemäß einer bevorzugten Variante der Erfindung wird dieser Nachteil dadurch behoben, daß an der Welle mit dem formschlüssig verbundenen Schneckenbesatz ein ebenfalls formschlüssig verbundenes Zahnrad angeordnet ist, das ein auf der gegenüberliegenden Welle frei drehbares Gegenzahnrad antreibt, welches mit dem ebenfalls um diese Welle frei drehbaren Gegendrallelement fest verbunden ist. In diesem Fall wird also nicht das Gegendrallelement direkt von dem gegenüberstehenden Schneckenbesatz, sondern über ein integriertes Zahnradgetriebe angetrieben.

Vorteilhaft können die Zahnräder analog zu üblichen Schneckenbesatzelementen auf die Schneckenwellen aufgesteckt bzw. aufgeschoben werden.

Mit der Erfindung werden folgende Vorteile erzielt:
- Die Erfindung ermöglicht mit relativ geringem maschinenbaulichem Aufwand die Realisierung einer Schneckenmaschine, bei der Gleich- und Gegendrallzonen in einem Gehäuse untergebracht sind und nur ein einziger Antrieb erforderlich ist. Dabei kann ein Wechsel von Gleich- auf Gegendrall und vice versa von Gegendrall auf Gleichdrall erfolgen. Weiterhin können längs der Schneckenwellen im Wechsel Gleich- und Gegendrallbesätze aufeinanderfolgen.
- Die erfindungsgemäße Lösung ist auch kompatibel zu allen bisherigen Schneckenmaschinen-Konstruktionsprinzipien. Dies hat den Vorteil, daß vorhandene Anlagen ohne weiteres nachgerüstet bzw. modifiziert werden können.

Im folgenden wird die Erfindung anhand von Zeichnungen und Ausführungsbeispielen näher erläutert. Es zeigen
- Fig. 1: das Grundprinzip einer Zweiwellenschnecke mit einem Gleichdrall- und einem Gegendrallabschnitt
- Fig. 2: die Lagerung des Gegendrallelements bei unterbrochener Schneckenwelle
- Fig. 3: einen Gleichdrallabschnitt und einen darauffolgenden Gegendrallabschnitt mit Zahnradgetriebe
- Fig. 4: die Lagerung bei dem Zahnradgetriebe für den Gegendrallabschnitt
- Fig. 5: eine Schneckenwellenmaschine, bei der Gleichdrall- und Gegendrallabschnitte im Wechsel aufeinanderfolgen und
- Fig. 6: einen Querschnitt A-A durch das Zahnradgetriebe gemäß Fig. 5.

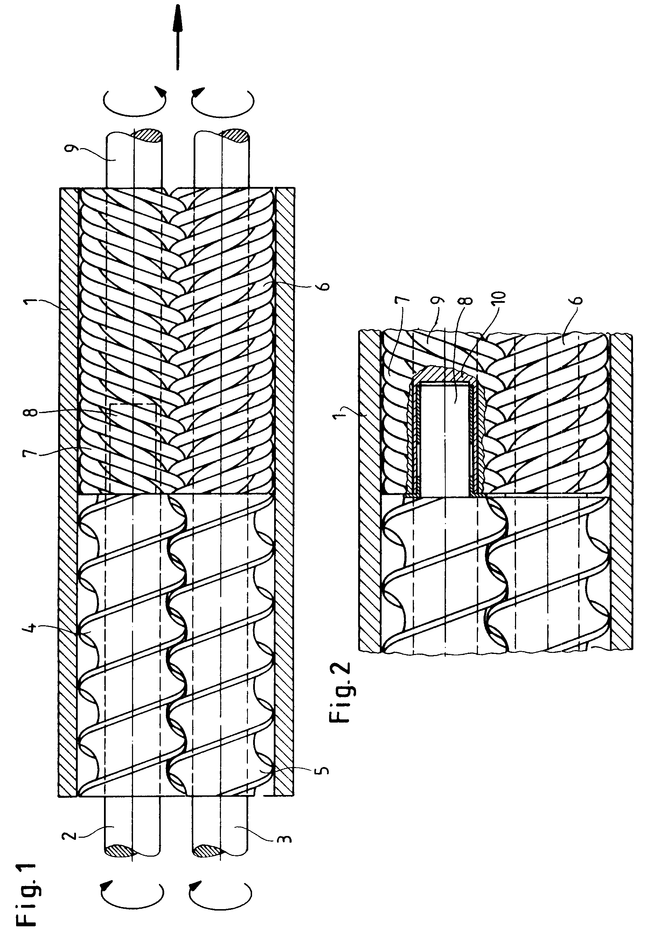

Die in Fig. 1 schematisch dargestellte Zweiwellenschneckenmaschine besteht aus dem Gehäuse 1 und den beiden Schneckenwellen 2 und 3 mit den auf die Wellen aufgeschobenen Schneckenbesätzen 4, 5, 6 und 7. Bei den Schneckenbesätzen 4 und 5 handelt es sich um rechtsgängige schraubenförmige Schnecken oder Förderelemente, die miteinander im Eingriff stehen. Der Schneckenbesatz 6 ist hier eine Schnecke mit geringerer Steigung (kleinerer Ganghöhe). Dagegen handelt es sich bei dem Schneckenbesatz 7 um eine linksgängige Schnecke mit derselben Steigung wie die Schnecke 6. Die Schnecken 4, 5 und 6 sind formschlüssig mit den Schneckenwellen 2 und 3 verbunden und drehen sich daher mit den Schneckenwellen mit. Im Gegensatz zur Schneckenwelle 3 ist die Schneckenwelle 2 im Bereich der linksgängigen Schnecke 7 unterbrochen. Die linksgängige Schnecke 7 ist nicht mit der Welle 2 verbunden, sondern kann sich frei um den herausragenden Endabschnitt 8 der Welle 2 drehen. Da sich die linksgängige Schnecke 7 mit der rechtsgängigen Schnecke 6 auf der Welle 3 in Eingriff befindet, wird sie über die Flanken der rechtsgängigen Schnecke 6 angetrieben. Während sich, wie in Fig. 1 angedeutet, die Wellen 2 und 3 und damit auch die Schneckenbesätze 4, 5 und 6 im Uhrzeigersinn drehen, dreht sich die rechtsgängige Schnecke 7 im Gegenuhrzeigersinn. Bei der linksgängigen Schnecke 7 handelt es sich also um ein Gegendrallelement. Am Ende des Gegendrallelements setzt sich die Schneckenwelle fort. Der fortgesetzte Teil der Schneckenwelle ist formschlüssig und kraftschlüssig mit dem Gegendrallelement 7 verbunden und rotiert daher ebenfalls im Gegenuhrzeigersinn. Die hier dargestellte zweiwellige Schneckenmaschine besteht also aus der Gleichdralldoppelschnecke 4, 5 und der darauffolgenden Gegendralldoppelschnecke 6, 7.

In Fig. 2 ist dargestellt, wie das Gegendrallelement auf dem Achsabschnitt 8 (Endstück der Schneckenwelle 2) gelagert ist. Das Gegendrallelement 7 ist zu diesem Zweck mit einer frei drehbaren Hülse 10 versehen, die über den Achsabschnitt 8 geschoben wird.

Gemäß einer alternativen Ausführungsform ist die Schneckenwelle 2 im Bereich des Gegendrallelements 7 nicht unterbrochen, sondern durchgehend. Der Innendurchmesser der axialem Bohrung im Gegendrallelement 7 muß bei dieser Ausführung ein hinreichend großes Spiel gegenüber der Welle 2 besitzen, damit sich das Gegendrallelement 7 auf der Welle 2 mit entgegengesetzter Richtung drehen kann.

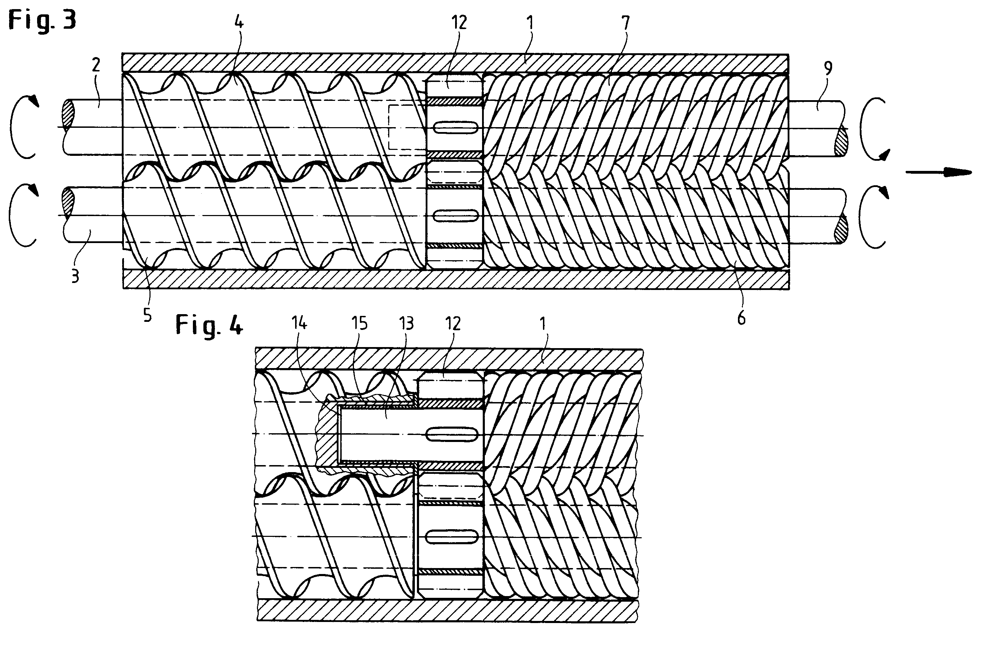

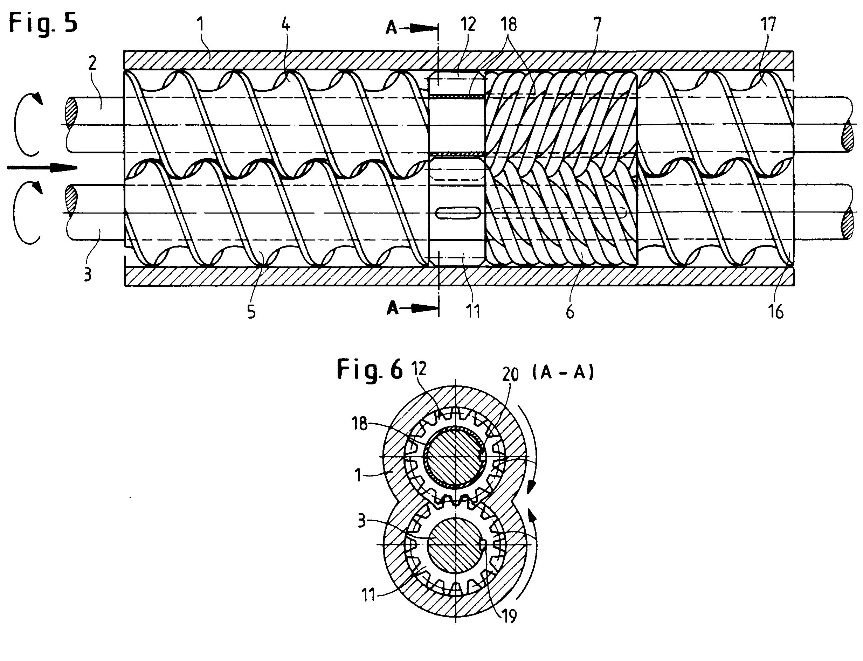

Bei der kombinierten Gleichdrall-/Gegendralldoppelschnecke gemäß Fig. 1 treten an den Flanken der gegensinnig rotierenden Schneckenbesätze 6 und 7 axiale Kräfte auf, die zu einer Beeinträchtigung der Standzeiten führen können. Bei einer weiterentwickelten Gleichdrall-/Gegendrallschnecke erfolgt daher der Antrieb des Gegendrallelements 7 nicht über die Schneckenflanken, sondern über ein in die Schneckenmaschine integriertes Zahnradgetriebe (siehe Fig. 3). Gemäß Fig. 3 sind im Anschluß an die Gleichdrallschnecke 4, 5 zwei gleiche Zahnräder 11 und 12 auf die Wellen 2 und 3 aufgeschoben bzw. aufgesteckt. Während das Zahnrad 11 form- und kraftschlüssig mit der Welle 3 verbunden ist, ist das auf der gegenüberliegenden Welle 2 angeordnete Zahnrad frei drehbar und kann sich daher in entgegengesetzter Richtung drehen. An der Übergangsstelle zwischen der Gleichdrallschnecke 4 und dem Gegendrallelement 7 ist die Schneckenwelle 2 wiederum unterbrochen. Das Zahnrad 12 und die Gegendrallschnecke 7 sind formschlüssig mit dem fortgesetzten Teil 9 der Schneckenwelle 2 verbunden. Das Zahnrad 11 treibt also über das Zahnrad 12 den Schneckenwellenfortsatz 9 und damit auch das Gegendrallelement im Gegenuhrzeigersinn an. Die Gegendrallschnecken 6 und 7 brauchen sich daher bei dieser Ausführung an den Schneckenflanken nicht zu berühren. Das Gegenzahnrad 12 ist, wie schon erwähnt, frei drehbar auf dem Endabschnitt der Schneckenwelle 2 gelagert. Diese Lagerung kann wie in Fig. 4 dargestellt, so ausgeführt werden, daß sich das Zahnrad 12 mit einem Achsabschnitt 13, über den eine Hülse 15 gesteckt ist, in einer Lagerschale 14 am Endabschnitt der Schneckenwelle 2 dreht.

Ein weiteres Ausführungsbeispiel ist in den Fig. 5 und 6 gezeigt. Die Zweiwellenschneckenmaschine weist in diesem Fall zwei durchgehende Wellen 2 und 3 auf. Auf eine erste Gleichdrallzone mit den Schnecken 4 und 5 folgt eine Gegendrallzone mit den Schnecken 6 und 7 (Gegendrallelement) und darauf wiederum eine Zone mit Gleichdrallschnecken 16 und 17. Das Gegendrallelement wird wie bei der Ausführung nach Fig. 3 und 4 durch die Zahnräder 11, 12 angetrieben. Da die Welle 2 durchgehend ist, muß das Gegendrallelement 7 und das Zahnrad 12 zur Welle hin ein genügend großes Spiel aufweisen, damit sich diese Elemente frei drehen können. Das Spiel zur Welle 2 wird durch wartungsarme Lagerungen realisiert. Alle anderen Besatzelemente, d.h. die Gleichdrallschnecken 4 und 5, das Zahnrad 11, die Gegendrallschnecke 6 sowie die darauffolgenden Gleichdrallschnecken 16 und 17 sind form- und kraftschlüssig mit den Wellen 2 und 3 verbunden. Das Gegendrallelement 7 und das Zahnrad 12 sind auf einer Distanzhülse 18 gelagert, die ebenfalls formschlüssig mit der Welle 2 verbunden ist. Die Länge der Distanzhülse 18 wird so gewählt, daß zwischen dem Gegendrallelement 7 und der darauffolgenden Gleichdrallschnecke 17 ein geringes axiales Spiel verbleibt. Auf diese Weise werden Reibungs- und Materialverluste durch Abrieb zwischen den beiden sich gegenläufig drehenden Schnecken 7 und 17 minimiert.

In Fig. 6 ist noch einmal das Zahnradgetriebe zum Antrieb des Gegendrallelements 7 in einer Querschnittszeichnung dargestellt. Das Zahnrad 11 ist mittels der Nut-/Federfixierung 19 formschlüssig mit der Welle 3 verbunden, während sich das Gegenzahnrad 12 frei um die Distanzhülse 18 drehen kann. Die Distanzhülse 18 ist mittels der Nut-/Federverbindung 20 auf der Welle 2 fixiert. Derartige Nut-/Federverbindungen sind zur formschlüssigen Montage von Besatzelementen gebräuchlich und auch anderweitig bekannt.

Die beschriebenen Ausführungsbeispiele beziehen sich auf Zweiwellenschneckenmaschinen; es leuchtet aber ein, daß die erfindungsgemäßen konstruktiven Maßnahmen im Hinblick auf einen Wechsel von Gleichdrall- und Gegendrallzonen auch bei Schneckenmaschinen mit mehr als zwei Wellen angewandt werden können. Am Beispiel der Extrusion von Kunststoffen werden nachfolgend drei typische Verfahrensschritte beschrieben, die in einer mehrwelligen Schneckenmaschine mit aufeinanderfolgenden Gleichdrall- und Gegendrallzonen durchgeführt werden können:

### 1. Aufschmelzen

Die Aufschmelzung von Kunststoffgranulat erfolgt zweckmäßig in einer Gleichdrallschnecke. In einer Gegendrallschnecke können nämlich bei der Förderung von Feststoffen, z.B. von Granulat, so hohe Klemmkräfte auftreten, daß die Schnecke mechanisch beschädigt oder zerstört wird.

### 2. Mischen

Das Einmischen von Zusatzstoffen (z.B. Farbstoffe zur Einfärbung eines Kunststoffes) erfolgt vorteilhaft in einer Gleichdrallschnecke, da Gleichdrallschnecken bessere Mischeigenschaften als Gegendrallschnecken besitzen.

### 3. Extrusion

Die Extrusion der zähflüssigen Thermoplastschnecke durch das formgebende Werkzeug erfolgt zweckmäßig mittels einer Gegendrallschnecke, da diese mit ihrem besseren Pumpwirkungsgrad einen höheren Druck aufbauen kann und dabei das oft empfindliche Produkt weniger beansprucht wird.

## Patentansprüche

1. Mehrwellige Schneckenmaschine mit einem Gehäuse (1) und einem Motor zum Antrieb von mehreren gleichsinnig oder gegensinnig rotierenden Schneckenwellen (2, 3), die mit schraubenförmigen und miteinander im Eingriff befindlichen Schneckenbesätzen zur Produktförderung ausgerüstet sind, dadurch gekennzeichnet, daß mindestens ein Schneckenbesatz (6) mit der dazugehörigen Welle (3) formschlüssig verbunden ist, während auf dem gegenüberliegenden Schneckenwellenabschnitt frei drehbar ein Gegendrallelement (7) gelagert ist, das mit entgegengesetzter Drehrichtung über die Schneckenwelle (3) mit dem formschlüssig verbundenen Schneckenbesatz (6) angetrieben wird.

2. Schneckenmaschine nach Anspruch 1, dadurch gekennzeichnet, daß die Schneckenwelle (2) im Bereich des Gegendrallelements (7) unterbrochen ist und daß das Gegendrallelement (7) an dem einen Ende mit einem Teil seiner Länge frei drehbar auf dem Endabschnitt (8) der Schneckenwelle (2) gelagert ist und an seinem anderen Ende formschlüssig mit dem fortgesetzten Teil (9) der Schneckenwelle verbunden ist.

3. Schneckenmaschine nach Anspruch 1, dadurch gekennzeichnet, daß das Gegendrallelement (7) auf einer durchgehenden Schneckenwelle (2) gelagert ist.

4. Schneckenmaschine nach Anspruch 1 bis 3, dadurch gekennzeichnet, daß an der Welle (3) mit der formschlüssig verbundenen Schneckenbesatz (6) ein ebenfalls formschlüssig verbundenes Zahnrad (11) angeordnet ist, daß ein auf der gegenüberliegenden Welle (2) frei drehbares Gegenzahnrad (12) antreibt, welches mit dem ebenfalls um diese Welle (2) frei drehbaren Gegendrallelement (7) fest verbunden ist.

5. Schneckenmaschine nach Anspruch 1 bis 4, dadurch gekennzeichnet, daß die Zahnräder (11, 12) als Schneckenbesatzelemente ausgeführt sind.

6. Schneckenmaschine nach Anspruch 1 bis. 5, dadurch gekennzeichnet, daß längs der Schneckenwellen (2, 3) im Wechsel im Gleich- und Gegendrall rotierende Besätze hintereinander angeordnet sind.
